# FASCICULE DE BREVET EUROPEEN

(11) **EP 3 747 238 B1**
(45) Date de publication et mention de la délivrance du brevet: **23.11.2022**
(21) Numéro de dépôt: 19702842.6
(22) Date de dépôt: 29.01.2019
(51) Int. Cl.: H04W 76/15, H04W 12/06, H04W 12/69, H04W 12/72

(54) **AGRÉGATION D'UNE PLURALITÉ DE CONNEXIONS RADIO DANS UN RÉSEAU SANS FIL**
AGGREGATION MEHRERER FUNKVERBINDUNGEN IN EINEM DRAHTLOSEN NETZWERK
AGGREGATING A PLURALITY OF RADIO CONNECTIONS IN A WIRELESS NETWORK

(30) Priorité: 31.01.2018 FR 1850798
(43) Date de publication de la demande: 09.12.2020
(73) Titulaire: SAGEMCOM BROADBAND SAS, 92500 Rueil-Malmaison (FR)
(72) Inventeur: PARISOT, Clément, 92500 Rueil Malmaison (FR); ROCQUELAY, Antonie, 92500 Rueil Malmaison (FR)
(74) Mandataire: Cabinet Le Guen Maillet
(86) Numéro de dépôt international: PCT/EP2019/052068
(87) Numéro de publication internationale: WO 2019/149679

(56) Documents cités:
- EP-A1- 3 174 325
- EP-A1- 3 217 758

## Description

La présente invention concerne l'agrégation d'une pluralité de connexions radio simultanées dans un réseau sans fil. L'invention concerne plus particulièrement le domaine des réseaux de communications sans fil conformes à l'une des normes IEEE 802.11 (« *Institute of Electrical and Electronics Engineers* » en anglais), c'est-à-dire celui des réseaux de communication sans fil communément appelés réseaux « *Wi-Fi* ».

Un réseau de communication sans fil (ci-après « réseau ») conforme à l'une des normes IEEE 802.11 comprend typiquement un dispositif électronique dit maître, communément appelé point d'accès (« *Access Point* » en anglais, ou « AP ») et une pluralité de dispositifs électroniques dits clients pouvant établir des connexions sans fil avec le point d'accès. Le dispositif électronique maître, ou point d'accès, est typiquement une « *box* » fournie par un opérateur Internet, c'est-à-dire une passerelle domestique (« *home gateway* », ou « *residential gateway* », en anglais). Les dispositifs électroniques clients sont typiquement des ordinateurs, tablettes ou téléphones dits *« intelligents » (« smartphone* » en anglais). On dit ainsi communément que les dispositifs électroniques clients sont connectés ou associés « *en Wi-Fi* » avec le point d'accès. On utilisera ci-après de façon équivalente les termes « connexion wifi » ou « association Wi-Fi ».

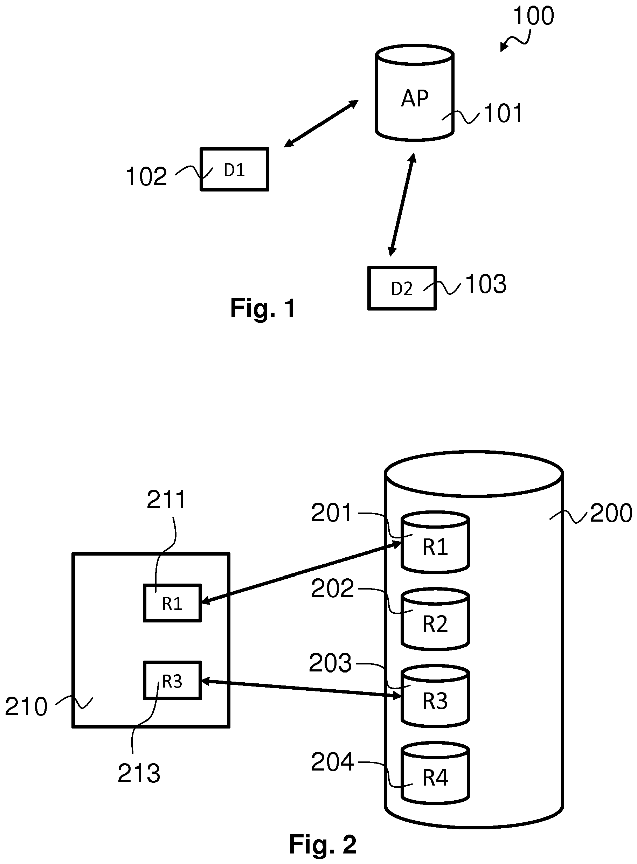

La **Fig. 1** illustre de façon très schématique un tel réseau 100. Le réseau 100 comprend un point d'accès AP 101 et deux dispositifs électroniques clients D1 102 et D2 103. Selon la version de la norme 802.11 IEEE utilisée par les différents dispositifs électroniques du réseau 100, une pluralité de bande de fréquences peut être utilisée pour établir des connexions radio entre les dispositifs électroniques clients et le point d'accès AP 101. Ainsi, le point d'accès AP 101 peut comprendre un ou plusieurs modules radios, chaque module radio étant adapté pour utiliser une bande de fréquences de la pluralité de bandes de fréquences permettant l'établissement d'une connexion avec un dispositif électronique client. Le dispositif électronique client D1 102 ou D2 103 comprend, pour permettre l'établissement d'une connexion radio avec le point d'accès AP 101, un module radio permettant d'utiliser une des bandes de fréquences utilisée par l'un des modules radios du point d'accès. L'établissement d'une connexion radio est donc possible entre le module radio du dispositif électronique client et le module radio du point d'accès utilisant une même bande de fréquences. Possiblement, un module radio peut utiliser plusieurs bandes de fréquences, mais de façon non simultanée. Le module radio doit alors basculer entre une pluralité de modes, chaque mode correspondant à l'utilisation d'une des bandes de fréquences utilisables par le module radio. On parle alors par exemple, pour un dispositif électronique client dont le module radio peut utiliser deux bandes de fréquences de dispositif électronique « *dual-band*/*single radio* » (en anglais dans le texte). Ainsi, si un point d'accès AP 101 comprend classiquement plusieurs modules radios permettant l'établissement simultané de connexions radio avec des dispositifs électroniques clients sur une pluralité de bandes de fréquences, un dispositif électronique client comprend généralement un seul module radio, pouvant possiblement utiliser une ou plusieurs bandes de fréquences. Des procédés existent alors permettant une sélection de la bande de fréquences optimale pour établir une connexion radio entre le dispositif électronique client et le point d'accès.

Ainsi, la gestion de réseaux de communications sans fil dans lesquels un point d'accès comprend une pluralité de modules radios et chaque dispositif électronique client un module radio, possiblement pouvant utiliser l'une ou l'autre des bandes de fréquences, est connue. Toutefois, sont apparus dernièrement sur le marché des dispositifs électroniques client comprenant deux ou plusieurs modules radios. A partir du moment où un point d'accès comprend lui aussi au moins deux modules radios, ces nouveaux dispositifs électroniques clients permettent alors l'établissement de plus d'une connexion radio simultanément entre ledit dispositif électronique client et le point d'accès. Lors de l'établissement d'une connexion radio avec un point d'accès, un dispositif électronique client, plus précisément un module radio dudit dispositif électronique client, s'identifie auprès du point d'accès au moyen d'une adresse dite physique, puisque associée au module radio du dispositif électronique client. Cette adresse physique est typiquement une adresse MAC (« *Media Access Control* » en anglais). Ainsi, du point de vue du point d'accès, chaque connexion radio établie par un même dispositif électronique client vers le point d'accès est considérée comme une connexion radio indépendante, identifiée par une adresse physique différente. Dit autrement, le point d'accès considère chaque connexion radio ainsi établie comme autant de connexions radios vers un dispositif électronique client indépendant, et non comme une pluralité de connexions radio vers un même dispositif électronique client.

Il est donc nécessaire de proposer un procédé permettant de pallier ces inconvénients.

L'invention concerne un procédé, pour un réseau de communication sans fil utilisant une pluralité de bandes de fréquences et comprenant au moins un dispositif électronique dit client, chaque dispositif électronique client comprenant au moins deux modules radios, chaque module radio étant adapté pour utiliser une bande de fréquences de la pluralité de bandes de fréquences, et un dispositif électronique dit maître, le dispositif électronique maître comprenant au moins deux modules radios, chaque module radio étant adapté pour utiliser une bande de fréquences de la pluralité de bandes de fréquences, le procédé permettant l'établissement d'une pluralité de connexions simultanées entre un dispositif électronique client et le dispositif électronique maître, le procédé étant exécuté par le dispositif électronique maître et comprenant les étapes de :
- recevoir, via un premier module radio du dispositif électronique maître et en provenance d'un premier module radio d'un dispositif électronique client, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- déterminer si une deuxième connexion est déjà établie entre un deuxième module radio du dispositif électronique maître distinct dudit premier module radio du dispositif électronique maître et un deuxième module radio du dispositif électronique client correspondant à l'identifiant reçu, ledit deuxième module radio du dispositif électronique client étant distinct dudit premier module radio du dispositif électronique client, et, si c'est le cas, alors :
   - émettre, via le deuxième module radio du dispositif électronique maître et à destination du deuxième module radio du dispositif électronique client, un message comprenant une demande de vérification de la requête d'établissement de la première connexion reçue, le message comprenant la première information d'authentification reçue,
   - recevoir, via le deuxième module radio du dispositif électronique maître et en provenance du deuxième module radio du dispositif électronique client, un message comprenant une information de validation de la requête d'établissement de la première connexion, et,
   - établir la première connexion entre le premier module radio du dispositif électronique client et le premier module radio du dispositif électronique maître.

Selon un mode de réalisation complémentaire de l'invention, le message comprenant l'information de validation comprend de plus une deuxième information d'authentification, le dispositif électronique maître envoyant un message au dispositif électronique client pour établir la première connexion, ce message comprenant la deuxième information d'authentification.

Selon un mode de réalisation complémentaire de l'invention, le réseau de communication sans fil étant conforme à une norme 802.11 IEEE, chaque module radio du dispositif électronique maître émettant un message de signalisation comprenant au moins un premier et un deuxième identifiants de réseaux sans fil, le deuxième identifiant de réseau sans fil étant déterminé en fonction du premier identifiant de réseau, le procédé est caractérisé en ce que chaque dispositif électronique client désirant établir une pluralité de connexions avec le dispositif électronique maître établit chaque connexion en utilisant le deuxième identifiant réseau.

Selon un mode de réalisation complémentaire de l'invention, le message de signalisation est :
- une trame balise émise périodiquement, ou,
- un message envoyé en retour après réception d'un message de détection de réseau sans fil envoyé par un dispositif électronique client.

Selon un mode de réalisation complémentaire de l'invention, le procédé comprend une étape ultérieure d'agrégation de la première connexion radio avec des connexions précédemment établies, l'étape d'agrégation comprenant les étapes de :
- mise à jour d'une table dite d'agrégation, la table comprenant pour chaque agrégation un identifiant associé, l'identifiant associé au dispositif électronique client et une liste de connexions associées, et,
- lorsqu'un message est à destination du dispositif électronique client, alors :
   - rechercher dans la table d'agrégation la liste des connexions associées,
   - déterminer une connexion pour envoyer le message,
   - envoyer le message via la connexion déterminée.

L'invention concerne également un procédé, pour un réseau de communication sans fil utilisant une pluralité de bandes de fréquences et comprenant au moins un dispositif électronique dit client, chaque dispositif électronique client comprenant au moins deux modules radios, chaque module radio étant adapté pour utiliser une bande de fréquences de la pluralité de bandes de fréquences, et un dispositif électronique dit maître, le dispositif électronique maître comprenant au moins deux modules radios, chaque module radio étant adapté pour utiliser une bande de fréquences de la pluralité de bandes de fréquences, le procédé permettant l'établissement d'une pluralité de connexions simultanées entre un dispositif électronique client et le dispositif électronique maître, le procédé étant exécuté par le dispositif électronique client, le procédé comprenant les étapes de :
- émettre, via un premier module radio du dispositif électronique client et à destination d'un premier module radio du dispositif électronique maître, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- recevoir, via un second module radio du dispositif électronique client distinct dudit premier module radio du dispositif électronique client et en provenance d'un second module radio du dispositif électronique maître distinct dudit premier module radio du dispositif électronique maître, un message comprenant une demande de vérification de la requête d'établissement de la première connexion émise, le message comprenant une première information d'authentification,
- déterminer si la première information d'authentification émise est égale à la première information d'authentification reçue, et, si c'est le cas :
- émettre, via le second module radio du dispositif électronique client et à destination du second module radio du dispositif électronique maître, un message comprenant une information de validation de la requête d'établissement de la première connexion, et,
- établir la première connexion entre le premier module radio du dispositif électronique client et le premier module radio du dispositif électronique maître.

Selon un mode de réalisation complémentaire de l'invention, le message comprenant une information de validation de la requête d'établissement de la première connexion comprenant de plus une deuxième information d'authentification, la première connexion entre le premier module radio du dispositif électronique client et le premier module radio du dispositif électronique maître n'est établie que si le dispositif électronique client reçoit un message de demande d'établissement de connexion du dispositif électronique maître comprenant la deuxième information d'authentification.

Selon un mode de réalisation complémentaire de l'invention, le réseau de communication sans fil étant conforme à une norme 802.11 IEEE, chaque module radio du dispositif électronique maître émettant un message de signalisation comprenant au moins un premier et un deuxième identifiants de réseaux sans fil, le deuxième identifiant de réseau sans fil étant déterminé en fonction du premier identifiant de réseau, chaque dispositif électronique client désirant établir une pluralité de connexions simultanées avec le dispositif électronique maître établit chaque connexion en utilisant le deuxième identifiant réseau.

L'invention concerne également un dispositif électronique dit maître, le dispositif électronique maître étant adapté pour être connecté à un réseau de communication sans fil utilisant une pluralité de bandes de fréquences et comprenant au moins un dispositif électronique dit client, chaque dispositif électronique client comprenant au moins deux modules radios, chaque module radio étant adapté pour utiliser une bande de fréquences de la pluralité de bandes de fréquences, le dispositif électronique maître comprenant au moins deux modules radios, chaque module radio étant adapté pour utiliser une bande de fréquences de la pluralité de bandes de fréquences, le dispositif électronique maître étant adapté pour :
- recevoir, via un premier module radio du dispositif électronique maître et en provenance d'un premier module radio d'un dispositif électronique client, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- déterminer si une deuxième connexion est déjà établie entre un deuxième module radio du dispositif électronique maître distinct dudit premier module radio du dispositif électronique maître et un deuxième module radio du dispositif électronique client correspondant à l'identifiant reçu, ledit deuxième module radio du dispositif électronique client étant distinct dudit premier module radio du dispositif électronique client, et, si c'est le cas, alors :
   - émettre, via le deuxième module radio du dispositif électronique maître et à destination du deuxième module radio du dispositif électronique client, un message comprenant une demande de vérification de la requête d'établissement de la première connexion reçue, le message comprenant la première information d'authentification reçue,
   - recevoir, via le deuxième module radio du dispositif électronique maître et en provenance du deuxième module radio du dispositif électronique client, un message comprenant une information de validation de la requête d'établissement de la première connexion, et,
   - établir la première connexion entre le premier module radio du dispositif électronique client et le premier module radio du dispositif électronique maître.

L'invention concerne également un dispositif électronique dit client, le dispositif électronique client étant adapté pour être connecté à un réseau de communication sans fil utilisant une pluralité de bandes de fréquences et comprenant un dispositif électronique dit maître, chaque dispositif électronique maître comprenant au moins deux modules radios, chaque module radio étant adapté pour utiliser une bande de fréquences de la pluralité de bande de fréquences, le dispositif électronique client comprenant au moins deux modules radios, chaque module radio étant adapté pour utiliser une bande de fréquences de la pluralité de bandes de fréquences, le dispositif électronique client étant configuré pour :
- émettre, via un premier module radio du dispositif électronique client et à destination d'un premier module radio du dispositif électronique maître, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- recevoir, via un second module radio du dispositif électronique client distinct dudit premier module radio du dispositif électronique client et en provenance d'un second module radio du dispositif électronique maître distinct dudit premier module radio du dispositif électronique maître, un message comprenant une demande de vérification de la requête d'établissement de la première connexion émise, le message comprenant une première information d'authentification,
- déterminer si la première information d'authentification émise est égale à la première information d'authentification reçue, et, si c'est le cas :
- émettre, via le second module radio du dispositif électronique client et à destination du second module radio du dispositif électronique maître, un message comprenant une information de validation de la requête d'établissement de la première connexion, et,
- établir la première connexion entre le premier module radio du dispositif électronique client et le premier module radio du dispositif électronique maître.

L'invention concerne également un programme d'ordinateur, qui peut être stocké sur un support et/ou téléchargé d'un réseau de communication, afin d'être lu par un processeur d'un dispositif électronique dit maître d'un réseau de communication sans fil. Ce programme d'ordinateur comprend des instructions pour implémenter tout ou partie des étapes du procédé permettant l'établissement d'une pluralité de connexions simultanées entre un dispositif électronique client et le dispositif électronique maître, lorsque ledit programme est exécuté par le processeur.

L'invention concerne également un medium de stockage d'informations ou support d'enregistrement comprenant un tel programme d'ordinateur.

L'invention concerne également un programme d'ordinateur, qui peut être stocké sur un support et/ou téléchargé d'un réseau de communication, afin d'être lu par un processeur d'un dispositif électronique dit client d'un réseau de communication sans fil. Ce programme d'ordinateur comprend des instructions pour implémenter tout ou partie des étapes du procédé permettant l'établissement d'une pluralité de connexions simultanées entre le dispositif électronique client et un dispositif électronique maître, lorsque ledit programme est exécuté par le processeur.

L'invention concerne également un medium de stockage d'informations ou support d'enregistrement comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement un réseau de communication sans fil comprenant une pluralité de dispositifs électroniques clients et un dispositif électronique maître, ou point d'accès, par exemple conforme à une norme 802.11 IEEE,
- la **Fig. 2** illustre schématiquement un dispositif électronique client et un dispositif électronique maître, ou point d'accès, selon un mode de réalisation de l'invention,
- la **Fig. 3** illustre schématiquement les étapes d'un procédé permettant l'établissement d'une pluralité de connexions entre un dispositif électronique client et un dispositif électronique maître d'un réseau de communication sans fil, selon un mode de réalisation de l'invention,
- la **Fig. 4** illustre schématiquement l'architecture fonctionnelle d'un dispositif électronique dit maître d'un réseau de communication sans fil selon un mode de réalisation de l'invention,
- la **Fig. 5** illustre schématiquement l'architecture matérielle d'un dispositif électronique dit maître, ou point d'accès, d'un réseau de communication sans fil, le dispositif électronique maître étant adapté pour établir une pluralité de connexions radio avec un dispositif électronique client, selon un mode de réalisation de l'invention,
- la **Fig. 6** illustre schématiquement l'architecture matérielle d'un dispositif électronique dit client d'un réseau de communication sans fil, le dispositif électronique client étant adapté pour établir une pluralité de connexions radio avec un dispositif électronique maître, ou point d'accès, selon un mode de réalisation de l'invention.

L'invention permet à un dispositif électronique maître, ou point d'accès, d'un réseau de communication sans fil de pouvoir détecter quand un dispositif électronique client cherche à établir une pluralité de connexions radio simultanées avec lui. En particulier, une information permettant d'identifier - de manière unique - un dispositif électronique client est intégrée dans des trames d'établissement d'une connexion radio. Ainsi, le point d'accès peut déterminer les connexions radios établies correspondant à un même dispositif électronique client.

L'invention permet de vérifier, lors de l'établissement d'une nouvelle connexion radio entre un dispositif électronique client et un point d'accès, que la demande d'établissement provient bien du même dispositif électronique client. Pour cela, l'invention propose une vérification d'une demande d'établissement d'une nouvelle connexion radio au travers d'une première connexion radio précédemment établie. L'invention permet ainsi une protection contre l'usurpation d'identité ou des attaques par rejeu.

L'invention permet de regrouper, ou agréger, différentes connexions radio établies entre un dispositif électronique client et un point d'accès, le regroupement étant réalisé au niveau « liaison de données » de la couche OSI (« *Open Systems Interconnection* » en anglais). Plus précisément, le regroupement, ou l'agrégation, est réalisé au niveau de la couche MAC d'un protocole conforme à la norme 802.11 IEEE. Le procédé d'agrégation selon l'invention permet alors une répartition de la charge réseau entre les différentes connexions radio vers un même dispositif électronique client. Dit autrement, un trafic réseau descendant, c'est-à-dire des trames de données envoyées par le point d'accès vers le dispositif électronique client, peuvent être transmises en utilisant l'une ou l'autre des connexions de la pluralité des connexions radio établies vers ce dispositif électronique client, comme expliqué ci-après. Une agrégation classique peut aussi être mise en place dans le sens montant, c'est-à-dire pour des trames de données envoyées par le dispositif électronique client vers le point d'accès.

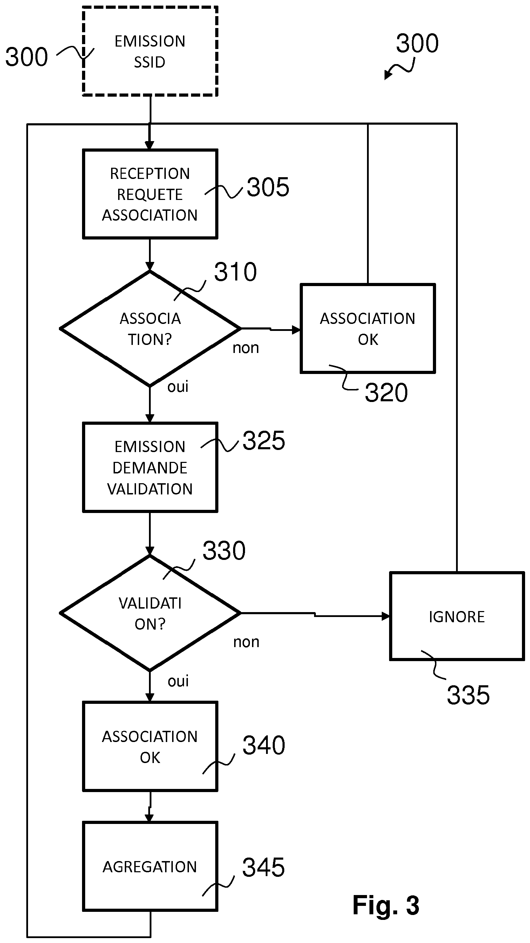

La **Fig. 2** illustre schématiquement un dispositif électronique client 210 et un dispositif électronique maître 200, ou point d'accès 200, selon un mode de réalisation de l'invention. Le dispositif électronique client 210 peut être l'un des dispositifs électroniques clients D1 102 ou D2 103 du réseau 100, lorsque ledit dispositif électronique client comprend au moins deux modules radios et met en œuvre le procédé de l'invention. De même, le dispositif électronique maître 200 peut être le dispositif électronique maître 101, lorsque ledit dispositif électronique maître met en œuvre le procédé de l'invention. Le dispositif électronique client 210 comprend ici deux modules radios R1 211 et R3 213. Par convention, l'appellation R1, respectivement R3, fait référence à la bande de fréquences utilisée par le module radio 211 ou 213. Possiblement, le dispositif électronique client 210 peut comprendre plus que deux modules radios, ou chaque module radio peut utiliser, non simultanément, plusieurs bandes de fréquences. Le dispositif électronique maître, ou point d'accès, 200 comprend ici quatre modules radios R1 201, R2 202, R3 203 et R4 204. La convention R1, R2, R3 et R4 est la même que précédemment, le module radio 211 du dispositif électronique client peut donc potentiellement établir une connexion radio avec le module radio 201 du dispositif électronique maître puisqu'ils utilisent une même bande de fréquences R1. Le même raisonnement s'applique pour les modules radios 213 et 204, avec l'utilisation de la bande de fréquences R3. Ainsi, comme illustré, deux connexions radio ont été établies entre le dispositif électronique client 210 et le dispositif électronique maître 200. Une première connexion radio, sur la bande de fréquences R1, entre le module radio 211 du dispositif électronique client 210 et le module radio 201 du dispositif électronique maître 200. Une deuxième connexion radio, sur la bande de fréquences R3, entre le module radio 213 du dispositif électronique client 210 et le module radio 203 du dispositif électronique maître 200. Le procédé divulgué ci-après (Fig. 3) permet *in fine* d'agréger ces deux connexions.

La **Fig. 3** illustre schématiquement les étapes d'un procédé 300 permettant l'établissement d'une pluralité de connexions entre un dispositif électronique client, possiblement le dispositif électronique 210 de la Fig. 2, et un dispositif électronique maître, possiblement le dispositif électronique maître 200 de la Fig. 2, d'un réseau de communication sans fil, selon un mode de réalisation de l'invention.

Afin de pouvoir plus aisément isoler les connexions radio correspondant à des connexions radio vers un dispositif électronique client isolé et celles correspondant à des connexions radio vers un même dispositif électronique client, il est avantageusement proposé que le dispositif électronique maître, plus précisément chacun de ses modules radios, utilise au moins deux réseaux sans fil. Dit autrement, pour un réseau sans fil conforme à une norme 802.11 IEEE, chaque module radio du dispositif électronique maître utilise deux réseaux sans fil, chaque réseau étant associé à un SSID (« *Service Set Identifier* » en anglais) différent. Les deux SSID sont donc *a priori* utilisables par un dispositif électronique client pour établir une connexion. Avantageusement, le deuxième SSID correspond à un réseau sans fil qui est une duplication du réseau sans fil correspondant au premier SSID. Par duplication, on entend que les caractéristiques techniques de chaque réseau sans fil, sauf le SSID et celles discutés ci-après, sont identiques. Dit autrement, le dispositif électronique maître définit pour chaque module radio, c'est-à-dire pour chaque interface physique, deux interfaces réseaux dites virtuelles, chaque interface réseau virtuelle correspondant à un SSID différent. Avantageusement, un premier réseau sans fil correspondant au premier SSID est géré de manière classique, alors que le deuxième réseau sans fil, correspondant au deuxième SSID est géré selon le procédé décrit ci-après selon l'invention. Cela permet par exemple de distinguer une première interface réseau virtuelle, c'est-à-dire un premier SSID, dédié aux dispositifs électroniques client ne mettant pas en œuvre l'invention ou ne souhaitant pas mettre en place d'agrégation de connexions radio, et une deuxième interface réseau virtuelle, c'est-à-dire un deuxième SSID, dédié aux dispositifs électroniques client utilisant le procédé d'agrégation de connexions radio, objet de l'invention.

Selon un mode de réalisation de l'invention, le deuxième SSID est dit « invisible » (« *hidden* » en anglais), c'est-à-dire qu'il n'est pas diffusé par le dispositif électronique maître. Ce deuxième SSID peut prendre une forme prédéterminée, fonction de la forme du premier SSID. Ainsi, par exemple, chaque module radio d'un dispositif électronique maître mettant en œuvre l'invention peut diffuser un premier SSID de nom « NETNAME » à destination des dispositifs électroniques client ne mettant pas en œuvre l'invention et utiliser un deuxième SSID, de nom « NETNAME_AG », construit à partir du nom du premier SSID de façon prédéterminée (ici, par l'ajout de la chaîne de caractère « _AG »). Ainsi, les dispositifs électroniques clients peuvent utiliser le SSID « NETNAME_AG », prédéterminé en fonction du nom du premier réseau sans fil « « NETNAME », alors que le SSID « NETNAME_AG » n'est pas diffusé par le dispositif électronique maître. Ce mode de réalisation correspond à la non diffusion dans un message de signalisation, dite trame balise Wi-Fi (« *beacon* » en anglais) du SSID correspondant au deuxième réseau sans fil.

Selon un mode de réalisation complémentaire, chaque dispositif électronique client peut envoyer une trame dite « probe request » au dispositif électronique maître afin de connaître les SSID utilisables. Dans ce cas, le dispositif électronique maître peut répondre à la trame « *probe request* » avec une trame dite « *probe response »,* laquelle trame « *probe response* » comprend le premier et le deuxième SSID. Selon un mode de réalisation alternatif de l'invention, un dispositif électronique client mettant en œuvre l'invention envoie une trame « *probe request* » comprenant une information supplémentaire indiquant que le dispositif électronique client est compatible avec le procédé de l'invention. Dans ce cas, le dispositif électronique maître répond par une trame « *probe response* » comprenant le deuxième SSID. Dans le cas contraire, le dispositif électronique maître répond par une trame « *probe response* » comprenant le premier SSID. Ainsi, l'invention peut être mise en œuvre de façon transparente pour des dispositifs électroniques clients ne comprenant qu'un unique module radio.

Au final, les dispositifs électroniques clients mettant en œuvre l'invention sont isolés sur le réseau sans fil correspondant au deuxième SSID.

Ainsi, selon les différents modes de réalisation décrits ci-dessus, dans une première étape 300, chacun des modules radios du dispositif électronique maître comprend une interface virtuelle correspondant à un SSID dédié à la connexion des dispositifs électroniques clients mettant en œuvre l'invention. Dit autrement, le dispositif électronique maître, ou point d'accès, met en œuvre un SSID, invisible ou non, pour la connexion des dispositifs électroniques souhaitant établir une pluralité de connexions radio simultanées avec le point d'accès.

Dans une étape suivante 305, le dispositif électronique maître, ou point d'accès, reçoit, via un premier module radio du dispositif électronique maître et en provenance d'un premier module radio d'un dispositif électronique client, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion. Ce message est un message dit « association request » tel que défini dans un protocole 802.11 IEEE, comprenant un identifiant unique du dispositif électronique client et une première information d'authentification associée à la demande de connexion. Selon un mode de réalisation de l'invention, le message peut comprendre de plus, en complément de l'identifiant du dispositif électronique client, un identifiant d'agrégation, c'est-à-dire d'un regroupement existant ou non de connexions radio. Ce dernier mode de réalisation permet ainsi à un même dispositif électronique client la gestion d'une pluralité de connexions radio possiblement regroupées en différentes agrégations.

L'information supplémentaire peut être comprise dans un champ dit « vendor specific », ce qui permet de garantir la compatibilité d'un dispositif électronique client mettant en œuvre l'invention avec un point d'accès ne mettant pas en œuvre l'invention.

Le dispositif électronique maître recevant le message enregistre dans une mémoire les informations comprises dans le message. Par exemple, le dispositif électronique maître tient à jour une table dite «table d'association» associant l'identifiant du dispositif électronique client, possiblement un identifiant d'agrégation, une adresse MAC associée au premier module radio du dispositif électronique maître recevant le message et une indication de l'établissement ou non d'une connexion. Une association correspond à une connexion radio établie entre le dispositif électronique maître et le dispositif électronique client. Selon un mode de réalisation, la table d'association comprend une information supplémentaire permettant d'identifier un dispositif électronique maître. Ce dernier cas correspond à un dispositif électronique client qui établit une pluralité de connexions radio avec une pluralité de dispositifs électroniques maîtres, chaque dispositif électronique maître pouvant échanger des informations avec les autres dispositifs électroniques maîtres. Cela permet de définir un scénario d'agrégation distribuée des connexions radio. La table est dans ce cas maintenue à jour soit par un dispositif électronique maître spécifique, soit de manière distribuée.

Dans une étape suivante 310, le dispositif électronique maître détermine si une deuxième connexion est déjà établie entre un deuxième module radio du dispositif électronique maître distinct dudit premier module radio du dispositif électronique maître et un deuxième module radio du dispositif électronique client correspondant à l'identifiant reçu, ledit deuxième module radio du dispositif électronique client étant distinct dudit premier module radio du dispositif électronique client. Dit autrement, le dispositif électronique maître vérifie s'il existe déjà une connexion radio établie entre le dispositif électronique client et le dispositif électronique maître.

Dans une étape 320, s'il n'existe pas déjà une connexion radio établie, le dispositif électronique maître émet un message dit « *association response* » de manière classique et établit ensuite une connexion radio avec le dispositif électronique client. L'établissement de la connexion radio peut comprendre des étapes ultérieures, non décrites ici, d'authentification de type WPA/WPA2 (« *Wi-Fi Protected Access »* en anglais). A l'issue de cette étape, une connexion radio est établie entre le dispositif électronique client et le dispositif électronique maître. Le dispositif électronique peut se remettre à l'écoute d'une trame de type « *association request* », c'est-à-dire en attente d'une nouvelle étape 305.

Dans une étape 325, s'il existe déjà une connexion radio établie entre le dispositif électronique maître et le dispositif électronique client, le dispositif électronique maître émet via le deuxième module radio du dispositif électronique maître et à destination du deuxième module radio du dispositif électronique client, un message comprenant une demande de vérification de la requête d'établissement de la première connexion reçue, le message comprenant la première information d'authentification reçue. Dit autrement, le dispositif électronique maître émet à destination du dispositif électronique client, mais à travers la connexion radio précédemment établie, un message de vérification comprenant la première information d'authentification reçue.

Le dispositif électronique client reçoit donc ledit message de vérification. Si le dispositif électronique client est bien à l'origine de la demande d'établissement d'une nouvelle connexion radio via son premier module radio, alors le dispositif électronique client peut vérifier que la première information d'authentification reçue correspond bien à celle qu'il avait initialement envoyée dans le message reçu lors de l'étape 305 par le dispositif électronique maître. Si le dispositif électronique client n'est pas à l'origine de la demande, la première information d'authentification ne correspondra pas. Pour cette raison, la première information d'authentification est choisie par le dispositif électronique client de façon aléatoire ou pseudo-aléatoire, la première information d'authentification devant varier au fil du temps pour déjouer une attaque par rejeu (« *replay attack»* en anglais). La première information d'authentification est avantageusement un nonce, c'est-à-dire un nombre arbitraire destiné à être utilisé une seule fois. Selon un mode de réalisation de l'invention, la première information d'authentification est déterminée aléatoirement pour chaque demande d'établissement de connexion radio. Selon un mode de réalisation de l'invention, la première information d'authentification est déterminée en fonction d'un horodatage, d'informations liées au module radio, par exemple son adresse MAC, et de l'identifiant du dispositif électronique client. La première information d'authentification peut être un condensat des précédentes informations.

Si le dispositif électronique client est à l'origine d'une nouvelle demande d'établissement d'une connexion et que la première information d'authentification reçue correspond à celle envoyée par le dispositif électronique client, alors le dispositif électronique client envoie en retour vers le dispositif électronique maître un message comprenant une information de validation de la demande. Dans le cas contraire, le dispositif électronique client ne répond pas ou envoie un message comprenant une information de non validation.

Selon un mode de réalisation complémentaire de l'invention, dit avec « authentification mutuelle », le message comprenant une information de validation de la demande envoyée par le dispositif électronique client comprend en outre une deuxième information d'authentification. Cette deuxième information d'authentification est destinée avantageusement à déjouer une éventuelle attaque par usurpation d'identité dans le cas où un attaquant arriverait à prédire un identifiant de l'agrégation avant une première association.

Dans une étape 330, le dispositif électronique maître reçoit, via le deuxième module radio du dispositif électronique maître et en provenance du deuxième module radio du dispositif électronique client, un message comprenant une information de validation de la requête d'établissement de la première connexion. Si l'information de validation est positive, c'est-à-dire confirme que le dispositif électronique client est à l'origine de la demande d'établissement de la nouvelle connexion radio, alors le dispositif électronique maître passe à l'étape 340. Dans le cas contraire, ou bien en absence de réponse dans un temps prédéterminé, le dispositif électronique maître passe à l'étape 335.

L'étape 335 correspond au cas où le dispositif électronique maître ne reçoit pas de réponse ou bien une réponse indiquant que le dispositif électronique client n'est pas à l'origine de la demande d'établissement de la nouvelle connexion radio. Dans ce cas, la demande d'établissement de la nouvelle connexion radio est rejetée, par exemple via un message de type « *association response* » indiquant le refus de la connexion radio. Le dispositif électronique peut ensuite se remettre à l'écoute d'une trame de type « *association request* », c'est-à-dire en attente d'une nouvelle étape 305.

L'étape 340 correspond au cas où le dispositif électronique client, via une connexion précédemment établie, a confirmé qu'il était bien à l'origine de la demande d'établissement d'une nouvelle connexion radio. Le dispositif électronique maître peut donc poursuivre le procédé d'établissement d'une connexion radio entre le premier module radio du dispositif électronique client et le premier module radio du dispositif électronique maître. Ainsi, une trame dite « *association response* » est envoyée par le dispositif électronique maître au dispositif électronique client par le premier module radio. Si lors de l'étape 325, et conformément au mode de réalisation de l'invention dit « authentification mutuelle », le dispositif électronique a incorporé dans le message de validation une deuxième information d'authentification, alors le dispositif électronique maître incorpore cette même deuxième information d'authentification dans la trame dite « *association response* ». Ainsi, selon ce mode de réalisation complémentaire dit « authentification mutuelle », le dispositif électronique client recevant la trame dite « *association response* » comprenant la deuxième information d'authentification peut vérifier que la deuxième information d'authentification reçue correspond bien à celle envoyée lors de l'étape 325. Selon ce mode de réalisation, en cas de non correspondance, ou d'absence de la deuxième information d'authentification, le dispositif électronique client peut refuser l'établissement de la connexion avec le dispositif électronique maître. Le dispositif électronique client peut envoyer un message demandant l'annulation de l'association au dispositif électronique maître.

La table d'association est mise à jour par le dispositif électronique maître avec les informations correspondant à cette nouvelle connexion radio.

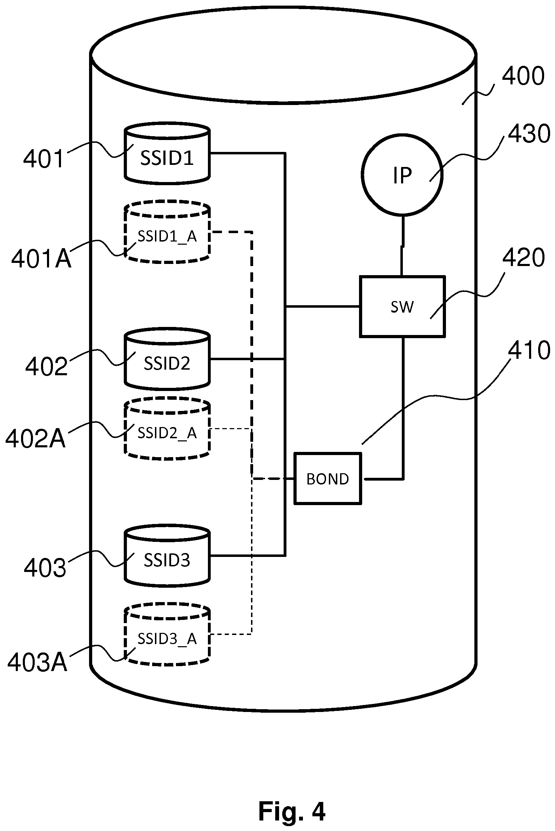

Dans une étape 345, le dispositif électronique maître peut agréger les différentes connexions radio vers un même dispositif électronique client. Cette agrégation est décrite par exemple dans la Fig. 4.

La **Fig. 4** illustre schématiquement l'architecture fonctionnelle d'un dispositif électronique dit maître 400 d'un réseau de communication sans fil selon un mode de réalisation de l'invention. Le dispositif électronique maître 400 peut être le dispositif électronique maître 200 décrit dans la Fig. 2 ou celui mettant en œuvre le procédé décrit dans la Fig. 3.

Le dispositif électronique maître 400 comprend ici trois modules radios, le premier utilisant par exemple une bande de fréquences R1, le deuxième module radio utilisant par exemple une bande de fréquences R2 et le troisième module radio utilisant par exemple une bande de fréquences R3. Le premier module radio comprend une interface virtuelle 401, correspondant à un réseau sans fil classique (par exemple, celui correspondant au premier SSID décrit dans la Fig. 3). L'interface virtuelle 401 correspond par exemple à la diffusion du SSID nommé « SSID1 ». Le premier module radio comprend aussi une interface réseau virtuelle 401A, possiblement « invisible », correspondant par exemple à la diffusion du SSID nommé « SSID1_A ». A chaque interface virtuelle est associée une adresse MAC.

Chaque interface 401, 402 et 403 est reliée directement à un module de commutation 420 (« *switch* » ou « *bridge* » en anglais). Le module de commutation 420 est possiblement relié à un module de routage 430. Des interfaces non représentées sur la Fig. 4 peuvent être connectées au module de commutation 420, par exemple des interfaces de type « Ethernet » ou xDSL (« *xDigital subscriber line* » en anglais) permettant la connexion du dispositif électronique maître à un réseau local et/ou Internet.

Les interfaces 401A, 402A et 403A sont agrégées au travers d'une interface virtuelle 410 dite d'agrégation (« *bonding»* en anglais), l'interface d'agrégation étant associée elle-même à une adresse MAC dite d'agrégation. Ainsi, toutes les connexions radios multiples établies par des dispositifs électroniques clients sont rattachées aux interfaces 401A, 402A et 403A, et sont *in fine* rattachées à l'interface virtuelle 410 d'agrégation.

Les procédés classiques d'agrégation, par exemple, sont connus dans le domaine de l'agrégation d'interface Ethernet, et ne sont pas directement utilisables dans le cas présent. En effet, un dispositif électronique client peut avoir établi des connexions radios avec l'interface 401A et l'interface 402A, mais pas forcément avec l'interface 403A. Or, les procédés classiques, pour émettre une trame vers le dispositif électronique client, pourraient choisir une interface au hasard entre les interfaces 401A, 402A et 403A. Les trames envoyées au travers de l'interface 403A seraient donc perdues.

Afin de pallier ces inconvénients, le dispositif électronique maître enregistre dans une mémoire une table dite « table d'association ». Cette table est mise à jour lors de l'exécution du procédé décrit dans la Fig. 3, par exemple lors de l'étape 340. Cette table d'association comprend, pour chaque connexion du dispositif électronique client:
- un identifiant associé à la connexion,
- un identifiant du dispositif électronique client avec lequel la connexion est établie,
- possiblement, si cette option est utilisée par le dispositif électronique client, un identifiant d'agrégation,
- un identifiant de l'interface radio virtuelle liée à cette connexion (par exemple une des interfaces 401A, 402A, 403A sur la figure 4).

Il est à noter qu'en parallèle, chaque dispositif électronique client, lorsqu'une agrégation d'une pluralité de connexions radio est en place comprend :
- pour chaque connexion radio établie, une interface à laquelle est associée une adresse MAC,
- une interface virtuelle dite d'agrégation, regroupant les interfaces précédentes, l'interface virtuelle d'agrégation étant associée à une adresse MAC dite d'agrégation,
- possiblement, si le dispositif électronique client utilise cette option, un identifiant d'agrégation, le dispositif électronique client pouvant alors gérer en parallèle plusieurs agrégations,
- le dispositif électronique maître enregistre également dans une mémoire une table dite « table d'agrégation », mise à jour par le dispositif électronique maître à chaque réception de trames de données (apprentissage), et comprenant, pour chaque identifiant d'un dispositif électronique client ou, si l'option information d'agrégation est utilisée, pour chaque couple (identifiant d'un dispositif électronique client, information d'agrégation), une liste d'adresses MAC peuplées par apprentissage et accessibles au travers des interfaces d'agrégation. Ces entrées sont dites de type « lower layer »,
- une entrée dite de type « upper layer » comprenant une liste d'adresses MAC également peuplées par apprentissage et accessibles au travers de la fonction de commutation (interfaces non-agrégation).

Dit autrement, du point de vue du module d'agrégation 410 sur la figure 4, les entrées de la table d'agrégation correspondant à des dispositifs électroniques dont les trames sont reçues via l'une des interfaces 401A, 402A ou 403A sont dites des entrées « lower layer ». De même, les entrées de la table d'agrégation correspondant à des dispositifs électroniques dont les trames sont reçues via le module de routage 430 et/ou les interfaces 401, 402 ou 403, sont dites des entrées « upper layer ».

Un procédé dit « d'apprentissage », permettant de peupler, c'est-à-dire de remplir, la table dite d'agrégation est décrit ci-après. Ce procédé, exécuté par le dispositif électronique maître, permet aussi la gestion d'éventuels dispositifs électroniques qui seraient connectés au dispositif électronique client. Cela est particulièrement avantageux pour un dispositif électronique client de type « répéteur Wi-Fi ».

Deux processus sont définis, un premier processus dit de « réception », et un deuxième processus dit « d'émission ».

Le premier processus dit de « réception » est mis en œuvre :
- lors de la réception par le dispositif électronique maître d'une trame à destination d'une interface virtuelle dite d'agrégation (ou de « bonding »), par exemple l'interface 410, la trame ayant été reçue via l'une des interfaces pouvant être potentiellement agrégées du dispositif électronique maître (correspondant aux entrées dites « lower layer ») ; les interfaces dites « lower layer » d'un dispositif électronique maître correspondent classiquement aux interfaces Wi-Fi,
- lors de la réception d'une trame à destination d'une interface virtuelle dite d'agrégation (ou de « bonding »), la trame ayant été reçue via une couche supérieure (ou « upper layer »).

Le deuxième processus dit d' « émission » est mis en œuvre lors de l'émission d'une trame à partir d'une interface virtuelle dite d'agrégation (ou de « bonding »), que ce soit à destination d'une entrée dite « lower layer » ou « upper layer », les émissions vers les entrées de type « lower layer » et « upper layer « pouvant faire l'objet d'un sous-processus dédié distinct.

La table dite d'association et la table dite d'agrégation sont synchronisées. En effet, lors de l'ajout d'une entrée dans la table dite d'association, une entrée correspondante de type « lower layer », est créée dans la table d'agrégation, contenant les identifiants du dispositif électronique client et possiblement, si cette option est utilisée par le dispositif électronique client, l'identifiant d'agrégation issu de l'entrée correspondante dans la table d'association, la liste des adresses MAC associées à cette entrée étant initialement vide. De même, si une entrée est supprimée de la table d'association, l'entrée de type «lower layer » correspondante est aussi supprimée dans la table dite d'agrégation, ainsi que la liste associée d'adresses MAC. Si un identifiant d'un dispositif électronique ou d'une agrégation est modifié dans la table d'association, alors la même modification est effectuée dans la table dite d'agrégation.

Un procédé de réception d'une trame selon un mode de réalisation de l'invention est décrit ci-après, ce procédé peut être mis en œuvre par le module d'agrégation 410.

Dans l'hypothèse où la trame réceptionnée provient d'une entrée dite « lower layer », alors :
(a) si la trame est reçue via une connexion, ou association Wi-Fi, de type agrégation, alors la trame est redirigée vers l'interface réseau virtuelle associée,
(b) si la trame est reçue via une interface réseau virtuelle, alors l'identifiant du dispositif électronique client émetteur et éventuellement un identifiant d'agrégation sont ajoutés à cette trame, puis la trame modifiée est envoyée vers l'interface virtuelle 410 dite d'agrégation,
(c) si la trame, par exemple dite de niveau 2, est reçue via l'interface virtuelle 410 dite d'agrégation, alors :
   ∘ la table d'agrégation est mise à jour :
      ▪ l'entrée de type « lower layer » correspondant à l'identifiant du dispositif électronique client est recherchée dans la table, et, si non déjà présente, l'adresse MAC source de la trame est ajoutée dans la liste associée à l'entrée, et,
      ▪ l'adresse MAC source de la trame est recherchée dans la table, et si elle est présente dans une autre liste associée à une autre entrée que l'entrée précédente, alors elle est supprimée de l'autre liste,
   ∘ si la trame est de type « unicast », alors :
      ▪ une entrée est recherchée dans la table correspondant à l'adresse MAC de destination de la trame,
         - si l'entrée trouvée est de type « upper layer », alors la trame est envoyée au processus d'émission à destination d'un dispositif électronique dit « upper layer »,
         - si l'entrée trouvée est de type « lower layer », alors la trame est envoyée au processus d'émission à destination d'un dispositif électronique dit « lower layer »,
         - si aucune entrée n'est identifiée, alors la trame est traitée comme étant de type « multicast ou broadcast », comme expliqué ci-après,
   ∘ si la trame est de type « multicast ou broadcast », alors :
      ▪ la trame est envoyée au processus d'émission à destination des entrées « lower layer »,
      ▪ si la trame ne comprend pas d'information de type « upper layer », alors la trame est dupliquée, la trame dupliquée étant envoyée au processus d'émission à destination des entrées « upper layer ».

Dans l'hypothèse où la trame réceptionnée provient d'une entrée dite « upper layer », et si la trame est reçue sur l'interface virtuelle 410 dite d'agrégation, alors :
- la trame est enrichie d'une information de type « upper layer » permettant de distinguer cette trame d'une trame qui proviendrait d'une entrée « lower layer »,
- la table d'agrégation est mise à jour :
   ∘ par ajout de l'adresse MAC source de la trame dans la liste des adresses MAC associées à l'entrée correspondante (de type « upper layer »),
   ∘ par recherche de l'adresse MAC source de la trame dans les autres entrées de la table et, si présente, alors élimination de celle-ci dans la liste des adresses MAC associées aux autres entrées.
- la suite du processus est identique au cas d'une trame venant d'un dispositif électronique dit « lower layer » : la trame est traitée comme dans le cas précédent à partir du cas (c) « *si la trame, par exemple dite de niveau 2, est reçue via l'interface virtuelle 410 dite d'agrégation ».*

Un procédé d'émission d'une trame selon un mode de réalisation de l'invention est décrit ci-après, ce procédé peut être mis en œuvre par le module d'agrégation 410.

Dans le cas de l'émission d'une trame à destination d'une adresse MAC d'un dispositif électronique correspondant à une entrée de type « lower layer » :
- pour une trame dite de niveau 2 de type « unicast » :
   ∘ recherche d'une entrée dans la table d'agrégation correspondant à l'adresse MAC de destination de la trame, et, si une entrée est trouvée :
      ▪ déterminer l'ensemble des associations (ou connexions) correspondant à l'agrégation trouvée, puis transmettre ces informations retrouvées, ainsi que la trame à émettre, à une fonction standard d'agrégation correspondant à l'état de l'art afin que celle-ci détermine l'association à utiliser pour émettre la trame,
      ▪ l'identifiant de l'association à utiliser pour émettre la trame est ajoutée à cette trame,
      ▪ la trame ainsi modifiée est ensuite envoyée vers l'interface réseau virtuelle correspondant à l'association à utiliser pour l'émettre,
      ▪ si aucune entrée n'est retrouvée, alors la trame est traitée comme une trame « multicast ou broadcast » (cf. ci-après),
- pour une trame dite de niveau 2 de type « multicast ou broadcast » :
   ∘ pour chaque agrégation existante, à l'exception de l'éventuelle agrégation dont la trame est issue :
      ▪ dupliquer la trame à émettre pour répéter les étapes ci-après pour chaque agrégation existante,
      ▪ rechercher l'ensemble des associations (ou connexions) associées à l'agrégation puis transmettre ces informations retrouvées, ainsi que la trame à émettre, à une fonction standard d'agrégation correspondant à l'état de l'art afin que celle-ci détermine l'association à utiliser pour émettre la trame,
      ▪ l'identifiant de l'association à utiliser pour émettre la trame est ajouté à cette trame, et,
      ▪ la trame ainsi modifiée est ensuite envoyée vers l'interface réseau virtuelle correspondant à l'association à utiliser pour l'émettre.

Si une ou plusieurs interfaces réseaux virtuelles reçoivent une trame en provenance de l'interface virtuelle 410 dite d'agrégation, alors cette trame est envoyée uniquement sur l'association (ou connexion) désignée par l'identifiant présent dans la trame de l'association à utiliser.

Dans le cas de l'émission d'une trame à destination d'une adresse MAC d'un dispositif électronique correspondant à une entrée de type « upper layer » :
- si la trame comprend une information de type « upper layer », elle est ignorée,
- sinon, la trame est envoyée à la couche supérieure, c'est-à-dire par exemple au module de routage 430.

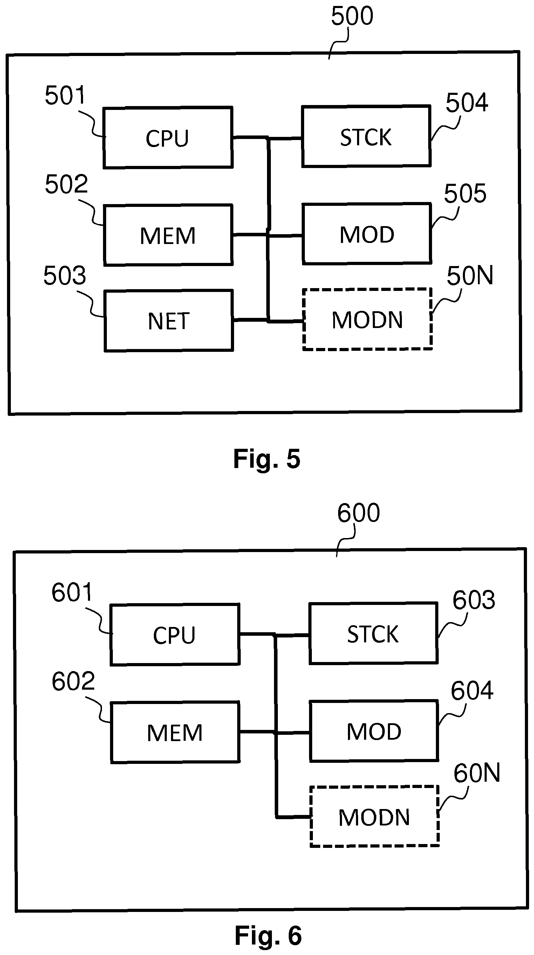

La **Fig. 5** illustre schématiquement l'architecture matérielle d'un dispositif électronique 500 dit maître, ou point d'accès, d'un réseau de communication sans fil, le dispositif électronique maître 500 étant adapté pour établir une pluralité de connexions radio simultanées avec un dispositif électronique client, selon un mode de réalisation de l'invention. Le dispositif électronique maître 500 est par exemple le dispositif électronique maître 200 de la Fig. 2.

Le dispositif électronique maître 500 est adapté pour mettre en œuvre le procédé, pour un réseau de communication sans fil utilisant une pluralité de bandes de fréquences et comprenant au moins un dispositif électronique dit client, chaque dispositif électronique client comprenant au moins deux modules radios, chaque module radio étant adapté pour utiliser une bande de fréquences de la pluralité de bandes de fréquences, chaque module radio étant adapté pour utiliser une bande de fréquences de la pluralité de bande de fréquences, le procédé permettant l'établissement d'une pluralité de connexions simultanées entre un dispositif électronique client et le dispositif électronique maître. Le procédé est exécuté par le dispositif électronique maître et comprenant les étapes de :
- recevoir, via un premier module radio du dispositif électronique maître et en provenance d'un premier module radio d'un dispositif électronique client, un message comprenant une requête d'établissement d'une première connexion entre le dispositif électronique maître et le dispositif électronique client, le message comprenant un identifiant associé au dispositif électronique client et une information d'authentification associée à la requête d'établissement de connexion,
- déterminer si une deuxième connexion est déjà établie entre un deuxième module radio du dispositif électronique maître distinct du premier module radio du dispositif électronique maître et un deuxième module radio du dispositif électronique client correspondant à l'identifiant reçu, ledit deuxième module radio du dispositif électronique client étant distinct dudit premier module radio du dispositif électronique client et, si c'est le cas, alors :
   - émettre, via le deuxième module radio du dispositif électronique maître et à destination du deuxième module radio du dispositif électronique client, un message comprenant une demande de vérification de la requête d'établissement de la première connexion reçue, le message comprenant la première information d'authentification reçue,
   - recevoir, via le deuxième module radio du dispositif électronique maître et en provenance du deuxième module radio du dispositif électronique client, un message comprenant une information de validation de la requête d'établissement de la première connexion, et,
   - établir la première connexion entre le premier module radio du dispositif électronique client et le premier module radio du dispositif électronique maître.

Ainsi, le dispositif électronique maître 500 comprend, reliés par un bus de communication : un processeur ou CPU (« *Central Processing Unit* » en anglais) 501 ; une mémoire MEM 502 de type RAM (« *Random Access Memory* » en anglais) et/ou ROM (« *Read Only Memory* » en anglais), un module réseau NET 503, un module de stockage STCK 504 de type stockage interne et possiblement une pluralité de modules radios 305 à 30N utilisant possiblement une pluralité de bandes de fréquences. Le module de stockage STCK 504 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 501 peut enregistrer des données, ou informations, dans la mémoire MEM 502 ou dans le module de stockage STCK 504. Le processeur CPU 501 peut lire des données enregistrées dans la mémoire MEM 502 ou dans le module de stockage STCK 504. Ces données peuvent correspondre à des paramètres de configuration, des instructions, à la table d'association ou à la table d'agrégation précédemment décrites. Le module réseau NET 503 permet la connexion du dispositif électronique maître 500 à un réseau local et/ou Internet. Chaque module radio 505 à 50N permet au dispositif électronique maître 500 d'envoyer, respectivement de recevoir, des messages ou trames à destination de, respectivement en provenance de, un ou plusieurs dispositifs électroniques clients, lesdits dispositifs électroniques clients ayant établi une connexion radio avec ledit module radio 505 à 50N.

Le processeur CPU 501 est capable d'exécuter des instructions chargées dans la mémoire MEM 502, par exemple à partir du module de stockage STCK 504 ou via le module réseau NET 503. Lorsque le dispositif électronique maître 500 est mis sous tension, le processeur CPU 501 est capable de lire de la mémoire MEM 502 des instructions et de les exécuter. Ces instructions forment un programme d'ordinateur causant la mise en œuvre, par le processeur CPU 501, de tout ou partie des procédés et étapes décrits ci-avant, particulièrement le procédé décrit dans la Fig. 2. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais). Les fonctions du dispositif électronique maître 500 peuvent être intégrées dans un point d'accès d'un réseau sans fil conforme à une norme 802.11 IEEE par une mise à jour d'un logiciel, c'est-à-dire par exemple par mise à jour du microprogramme (« *firmware* » en anglais) du dispositif électronique maître 500.

La **Fig. 6** illustre schématiquement l'architecture matérielle d'un dispositif électronique 600 dit client d'un réseau de communication sans fil, le dispositif électronique client 600 étant adapté pour établir une pluralité de connexions radio avec un dispositif électronique maître, ou point d'accès, selon un mode de réalisation de l'invention. Le dispositif électronique client 600 est par exemple le dispositif électronique client 210 de la Fig. 2.

Le dispositif électronique client 600 est adapté pour mettre en œuvre un procédé, pour un réseau de communication sans fil utilisant une pluralité de bandes de fréquences et comprenant au moins le dispositif électronique dit client et un dispositif électronique dit maître, le dispositif électronique maître comprenant au moins deux modules radios, chaque module radio étant adapté pour utiliser une bande de fréquences de la pluralité de bandes de fréquences, le dispositif électronique dit maître étant par exemple celui décrit dans la Fig. 4 ou 5, le procédé permettant l'établissement d'une pluralité de connexions simultanées entre le dispositif électronique client et le dispositif électronique maître. Le procédé est exécuté par le dispositif électronique client le procédé comprenant les étapes de :
- émettre, via un premier module radio du dispositif électronique client et à destination d'un premier module radio du dispositif électronique maître, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- recevoir, via un second module radio du dispositif électronique client distinct dudit premier module radio du dispositif électronique client et en provenance d'un second module radio du dispositif électronique maître distinct dudit premier module radio du dispositif électronique maître, un message comprenant une demande de vérification de la requête d'établissement de la première connexion émise, le message comprenant une première information d'authentification,

- déterminer si la première information d'authentification émise est égale à la première information d'authentification reçue, et, si c'est le cas :
- émettre, via le second module radio du dispositif électronique client et à destination du second module radio du dispositif électronique maître, un message comprenant une information de validation de la requête d'établissement de la première connexion, et,
- établir la première connexion entre le premier module radio du dispositif électronique client et le premier module radio du dispositif électronique maître.

Ainsi, le dispositif électronique client 600 comprend, reliés par un bus de communication : un processeur ou CPU (« *Central Processing Unit* » en anglais) 601 ; une mémoire MEM 602 de type RAM (« *Random Access Memory* » en anglais) et/ou ROM (« *Read Only Memory* » en anglais), un module de stockage STCK 603 de type stockage interne et possiblement une pluralité de modules radios 604 à 60N utilisant possiblement une pluralité de bandes de fréquences. Le module de stockage STCK 603 peut être de type disque dur HDD (« *Hard Disk Drive* » en anglais) ou SSD *(« Solid-State Drive* » en anglais), ou de type lecteur de support de stockage externe, tel un lecteur de cartes SD (« *Secure Digital* » en anglais). Le processeur CPU 601 peut enregistrer des données, ou informations, dans la mémoire MEM 602 ou dans le module de stockage STCK 603. Le processeur CPU 601 peut lire des données enregistrées dans la mémoire MEM 602 ou dans le module de stockage STCK 603. Ces données peuvent correspondre à des paramètres de configuration ou des instructions. Chaque module radio 604 à 60N permet au dispositif électronique client 600 d'envoyer, respectivement de recevoir, des messages ou trames à destination de, respectivement en provenance de, un ou plusieurs dispositifs électroniques maîtres, lesdits dispositifs électroniques maîtres ayant établi une connexion radio avec ledit module radio 604 à 60N.

Le processeur CPU 601 est capable d'exécuter des instructions chargées dans la mémoire MEM 602, par exemple à partir du module de stockage STCK 603. Lorsque le dispositif électronique client 600 est mis sous tension, le processeur CPU 601 est capable de lire de la mémoire MEM 602 des instructions et de les exécuter. Ces instructions forment un programme d'ordinateur causant la mise en œuvre, par le processeur CPU 601, de tout ou partie des procédés et étapes décrits ci-avant, particulièrement le procédé décrit dans la Fig. 2. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais). Les fonctions du dispositif électronique client 600 peuvent être intégrées dans un dispositif client, par exemple un smartphone, d'un réseau sans fil conforme à une norme 802.11 IEEE par une mise à jour d'un logiciel, c'est-à-dire par exemple par mise à jour du microprogramme (« *firmware* » en anglais) du dispositif électronique client 600.

## Revendications

1. Procédé, pour un réseau de communication sans fil utilisant une pluralité de bandes de fréquences et comprenant au moins un dispositif électronique dit client (210, 600), chaque dispositif électronique client comprenant au moins deux modules radios (211, 213, 604... 60N), chaque module radio étant adapté pour utiliser une bande de fréquences de la pluralité de bandes de fréquences , et un dispositif électronique dit maître (200, 400, 500), le dispositif électronique maître comprenant au moins deux modules radios (201, 202, 203, 204, 505... 50N), chaque module radio étant adapté pour utiliser une bande de fréquences de la pluralité de bandes de fréquences, le procédé permettant l'établissement d'une pluralité de connexions simultanées entre un dispositif électronique client et le dispositif électronique maître, le procédé étant exécuté par le dispositif électronique maître et comprenant les étapes de :
- recevoir (305), via un premier module radio du dispositif électronique maître et en provenance d'un premier module radio d'un dispositif électronique client, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- déterminer (310) si une deuxième connexion est déjà établie entre un deuxième module radio du dispositif électronique maître distinct dudit premier module radio du dispositif électronique maître et un deuxième module radio du dispositif électronique client correspondant à l'identifiant reçu, ledit deuxième module radio du dispositif électronique client étant distinct dudit premier module radio du dispositif électronique client, et, si c'est le cas, alors :
- émettre (325), via le deuxième module radio du dispositif électronique maître et à destination du deuxième module radio du dispositif électronique client, un message comprenant une demande de vérification de la requête d'établissement de la première connexion reçue, le message comprenant la première information d'authentification reçue,
- recevoir (330), via le deuxième module radio du dispositif électronique maître et en provenance du deuxième module radio du dispositif électronique client, un message comprenant une information de validation de la requête d'établissement de la première connexion, et,
- établir (340) la première connexion entre le premier module radio du dispositif électronique client et le premier module radio du dispositif électronique maître.

2. Procédé selon la revendication précédente, le message comprenant l'information de validation comprenant de plus une deuxième information d'authentification, le dispositif électronique maître envoyant un message au dispositif électronique client pour établir la première connexion, ce message comprenant la deuxième information d'authentification.

3. Procédé selon l'une des revendications précédentes, le réseau de communication sans fil étant conforme à une norme 802.11 IEEE, chaque module radio du dispositif électronique maître émettant un message de signalisation comprenant au moins un premier et un deuxième identifiants de réseaux sans fil, le deuxième identifiant de réseau sans fil étant déterminé en fonction du premier identifiant de réseau, chaque dispositif électronique client désirant établir une pluralité de connexions avec le dispositif électronique maître établit chaque connexion en utilisant le deuxième identifiant réseau.

4. Procédé selon la revendication précédente, le message de signalisation étant :
- une trame balise émise périodiquement, ou,
- un message envoyé en retour après réception d'un message de détection de réseau sans fil envoyé par un dispositif électronique client.

5. Procédé selon l'une des revendications précédentes, le procédé comprenant une étape ultérieure d'agrégation (345) de la première connexion radio avec des connexions précédemment établies, l'étape d'agrégation comprenant les étapes de :
- mise à jour d'une table dite d'agrégation, la table comprenant pour chaque agrégation un identifiant associé, l'identifiant associé au dispositif électronique client et une liste de connexions associées, et,
- lorsqu'un message est à destination du dispositif électronique client, alors :
- rechercher dans la table d'agrégation la liste des connexions associées,
- déterminer une connexion pour envoyer le message,
- envoyer le message via la connexion déterminée.

6. Procédé, pour un réseau de communication sans fil utilisant une pluralité de bandes de fréquences et comprenant au moins un dispositif électronique dit client (210, 600), chaque dispositif électronique client comprenant au moins deux modules radios (211, 213, 604...60N), chaque module radio étant adapté pour utiliser une bande de fréquences de la pluralité de bandes de fréquences, et un dispositif électronique dit maître (200, 400, 500), le dispositif électronique maître comprenant au moins deux modules radios (201, 202, 203, 204, 505... 50N), chaque module radio étant adapté pour utiliser une bande de fréquences de la pluralité de bandes de fréquences, le procédé permettant l'établissement d'une pluralité de connexions simultanées entre un dispositif électronique client et le dispositif électronique maître, le procédé étant exécuté par le dispositif électronique client, le procédé comprenant les étapes de :
- émettre (305), via un premier module radio du dispositif électronique client et à destination d'un premier module radio du dispositif électronique maître, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- recevoir (325), via un second module radio du dispositif électronique client distinct dudit premier module radio du dispositif électronique client et en provenance d'un second module radio du dispositif électronique maître distinct dudit premier module radio du dispositif électronique maître, un message comprenant une demande de vérification de la requête d'établissement de la première connexion émise, le message comprenant une première information d'authentification,
- déterminer si la première information d'authentification émise est égale à la première information d'authentification reçue, et, si c'est le cas :
- émettre (330), via le second module radio du dispositif électronique client et à destination du second module radio du dispositif électronique maître, un message comprenant une information de validation de la requête d'établissement de la première connexion, et,
- établir (340) la première connexion entre le premier module radio du dispositif électronique client et le premier module radio du dispositif électronique maître.

7. Procédé selon la revendication précédente, le message comprenant une information de validation de la requête d'établissement de la première connexion comprenant de plus une deuxième information d'authentification, la première connexion entre le premier module radio du dispositif électronique client et le premier module radio du dispositif électronique maître n'étant établie que si le dispositif électronique client reçoit un message de demande d'établissement de connexion du dispositif électronique maître comprenant la deuxième information d'authentification.

8. Procédé selon la revendication 5, le réseau de communication sans fil étant conforme à une norme 802.11 IEEE, chaque module radio du dispositif électronique maître émettant un message de signalisation comprenant au moins un premier et un deuxième identifiants de réseaux sans fil, le deuxième identifiant de réseau sans fil étant déterminé en fonction du premier identifiant de réseau, chaque dispositif électronique client désirant établir une pluralité de connexions simultanées avec le dispositif électronique maître établit chaque connexion en utilisant le deuxième identifiant réseau.

9. Dispositif électronique dit maître (200, 400, 500), le dispositif électronique maître étant adapté pour être connecté à un réseau de communication sans fil utilisant une pluralité de bandes de fréquences et comprenant au moins un dispositif électronique dit client (210, 600), chaque dispositif électronique client comprenant au moins deux modules radios (211, 213, 604...60N), chaque module radio étant adapté pour utiliser une bande de fréquences de la pluralité de bandes de fréquences, le dispositif électronique maître comprenant au moins deux modules radios (201, 202, 203, 204, 505... 50N), chaque module radio étant adapté pour utiliser une bande de fréquences de la pluralité de bandes de fréquences, le dispositif électronique maître étant adapté pour :
- recevoir, via un premier module radio du dispositif électronique maître et en provenance d'un premier module radio d'un dispositif électronique client, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- déterminer si une deuxième connexion est déjà établie entre un deuxième module radio du dispositif électronique maître distinct dudit premier module radio du dispositif électronique maître et un deuxième module radio du dispositif électronique client correspondant à l'identifiant reçu, ledit deuxième module radio du dispositif électronique client étant distinct dudit premier module radio du dispositif électronique client, et, si c'est le cas, alors :
- émettre, via le deuxième module radio du dispositif électronique maître et à destination du deuxième module radio du dispositif électronique client, un message comprenant une demande de vérification de la requête d'établissement de la première connexion reçue, le message comprenant la première information d'authentification reçue,
- recevoir, via le deuxième module radio du dispositif électronique maître et en provenance du deuxième module radio du dispositif électronique client, un message comprenant une information de validation de la requête d'établissement de la première connexion, et,
- établir la première connexion entre le premier module radio du dispositif électronique client et le premier module radio du dispositif électronique maître.

10. Dispositif électronique dit client (210, 600), le dispositif électronique client étant adapté pour être connecté à un réseau de communication sans fil utilisant une pluralité de bandes de fréquences et comprenant un dispositif électronique dit maître (200, 400, 500), chaque dispositif électronique maître comprenant au moins deux modules radios (201, 202, 203, 204, 505... 50N), chaque module radio étant adapté pour utiliser une bande de fréquences de la pluralité de bandes de fréquences, le dispositif électronique client comprenant au moins deux modules radios (211, 213, 604...60N), chaque module radio étant adapté pour utiliser une bande de fréquences de la pluralité de bandes de fréquences, le dispositif électronique client étant configuré pour :
- émettre (305), via un premier module radio du dispositif électronique client et à destination d'un premier module radio du dispositif électronique maître, un message comprenant une requête d'établissement d'une première connexion entre le dispositif électronique maître et le dispositif électronique client, le message comprenant un identifiant associé au dispositif électronique client et une première information d'authentification associée à la requête d'établissement de connexion,
- recevoir (325), via un second module radio du dispositif électronique client distinct dudit premier module radio du dispositif électronique client et en provenance d'un second module radio du dispositif électronique maître distinct dudit premier module radio du dispositif électronique maître, un message comprenant une demande de vérification de la requête d'établissement de la première connexion émise, le message comprenant une première information d'authentification,
- déterminer si la première information d'authentification émise est égale à la première information d'authentification reçue, et, si c'est le cas :
- émettre (330), via le second module radio du dispositif électronique client et à destination du second module radio du dispositif électronique maître, un message comprenant une information de validation de la requête d'établissement de la première connexion, et,
- établir (340) la première connexion entre le premier module radio du dispositif électronique client et le premier module radio du dispositif électronique maître.

11. Programme d'ordinateur comprenant des instructions pour mettre en œuvre, par un processeur (501) d'un dispositif électronique dit maître (200, 400, 500) d'un réseau de communication sans fil utilisant une pluralité de bandes de fréquences, le dispositif électronique maître comprenant au moins deux modules radios (201, 202, 203, 204, 505... 50N), chaque module radio étant adapté pour utiliser une bande de fréquences de la pluralité de bandes de fréquences, un procédé (300) permettant l'établissement d'une pluralité de connexions simultanées entre un dispositif électronique dit client (210, 600) et le dispositif électronique maître selon l'une des revendications 1 à 5, lorsque le programme d'ordinateur est exécuté par le processeur.

12. Support d'enregistrement sur lequel est stocké le programme d'ordinateur selon la revendication précédente.

13. Programme d'ordinateur comprenant des instructions pour mettre en œuvre, par un processeur (601) d'un dispositif électronique dit client (210, 600) d'un réseau de communication sans fil utilisant une pluralité de bandes de fréquences, le dispositif électronique client comprenant au moins deux modules radios (211, 213, 604...60N), chaque module radio étant adapté pour utiliser une bande de fréquences de la pluralité de bandes de fréquences, un procédé (300) permettant l'établissement d'une pluralité de connexions simultanées entre un dispositif électronique dit maître (200, 400, 500) et le dispositif électronique client selon l'une des revendications 6 à 7, lorsque le programme d'ordinateur est exécuté par le processeur.

14. Support d'enregistrement sur lequel est stocké le programme d'ordinateur selon la revendication précédente.

## Patentansprüche

1. Verfahren für ein drahtloses Netzwerk, das mehrere Frequenzbänder nutzt und mindestens eine elektronische Vorrichtung, Client (210, 600) genannt, wobei jede elektronische Client-Vorrichtung mindestens zwei Funkmodule (211, 213, 604...60N) umfasst, wobei jedes Funkmodul geeignet ist, ein Frequenzband der mehreren Frequenzbänder zu nutzen, und eine elektronische Vorrichtung, Master (200, 400, 500) genannt, umfasst, wobei die elektronische Master-Vorrichtung mindestens zwei Funkmodule (201, 202, 203, 204, 505...5N) umfasst, wobei jedes Funkmodul geeignet ist, ein Frequenzband der mehreren Frequenzbänder zu nutzen, wobei das Verfahren den Aufbau mehrerer gleichzeitiger Verbindungen zwischen einer elektronischen Client-Vorrichtung und der elektronischen Master-Vorrichtung ermöglicht, wobei das Verfahren durch die elektronische Master-Vorrichtung ausgeführt wird und folgende Schritte umfasst:
- Empfangen (305) einer Nachricht, die eine Anforderung zum Aufbau einer ersten Verbindung zwischen der elektronischen Master-Vorrichtung und der elektronischen Client-Vorrichtung umfasst, über ein erstes Funkmodul der elektronischen Master-Vorrichtung und von einem ersten Funkmodul der elektronischen Client-Verbindung, wobei die Nachricht eine Kennung, die der elektronischen Client-Vorrichtung zugeordnet ist, und eine erste Authentifizierungsinformation, die der Anforderung zum Aufbau einer Verbindung zugeordnet ist, umfasst,
- Feststellen (310), ob schon eine zweite Verbindung zwischen einem zweiten Funkmodul der elektronischen Master-Vorrichtung, das vom ersten Funkmodul der elektronischen Master-Vorrichtung verschieden ist, und einem zweiten Funkmodul der elektronischen Client-Vorrichtung, die der empfangenen Kennung entspricht, aufgebaut ist, wobei das zweite Funkmodul der elektronischen Client-Vorrichtung vom ersten Funkmodul der elektronischen Client-Vorrichtung verschieden ist, und wenn dies der Fall ist, dann:
- Senden (325) einer Nachricht, die eine Anfrage zur Verifizierung der empfangenen Anforderung zum Aufbau der ersten Verbindung umfasst, über das zweite Funkmodul der elektronischen Master-Vorrichtung und an das zweite Funkmodul der elektronischen Client-Vorrichtung, wobei die Nachricht die empfangene erste Authentifizierungsinformation umfasst,
- Empfangen (330) einer Nachricht, die eine Information zur Validierung der Anforderung zum Aufbau der ersten Verbindung umfasst, über das zweite Funkmodul der elektronischen Master-Vorrichtung und vom zweiten Funkmodul der elektronischen Client-Vorrichtung und
- Aufbauen (340) der ersten Verbindung zwischen dem ersten Funkmodul der elektronischen Client-Vorrichtung und dem ersten Funkmodul der elektronischen Master-Vorrichtung.

2. Verfahren nach dem vorhergehenden Anspruch, wobei die Nachricht die Validierungsinformation umfasst, die außerdem eine zweite Authentifizierungsinformation umfasst, wobei die elektronische Master-Vorrichtung eine Nachricht an die elektronische Client-Vorrichtung sendet, um die erste Verbindung aufzubauen, wobei diese Nachricht die zweite Authentifizierungsinformation umfasst.

3. Verfahren nach einem der vorhergehenden Ansprüche, wobei das drahtlose Kommunikationsnetzwerk einer Norm IEEE 802.11 entspricht, wobei jedes Funkmodul der elektronischen Master-Vorrichtung eine Signalisierungsnachricht sendet, die mindestens eine erste und eine zweite Kennung des drahtlosen Netzwerks umfasst, wobei die zweite Kennung des drahtlosen Netzwerks in Abhängigkeit von der ersten Netzwerkkennung bestimmt wird, wobei jede elektronische Client-Vorrichtung, die mehrere Verbindungen mit der elektronischen Master-Vorrichtung aufbauen will, jede Verbindung unter Nutzung der zweiten Netzwerkkennung aufbaut.

4. Verfahren nach dem vorhergehenden Anspruch, wobei die Signalisierungsnachricht
- ein periodisch gesendeter Beacon-Rahmen oder
- eine Nachricht ist, die nach Empfang einer von einer Client-Vorrichtung gesendeten Nachricht über die Erkennung des drahtlosen Netzwerks zurückgesendet wird.

5. Verfahren nach einem der vorhergehenden Ansprüche, wobei das Verfahren einen späteren Schritt des Aggregierens (345) der ersten Funkverbindung mit den zuvor aufgebauten Verbindungen umfasst, wobei der Schritt des Aggregierens die folgenden Schritte umfasst:
- Aktualisieren einer sogenannten Aggregationstabelle, wobei die Tabelle für jede Aggregation eine zugeordnete Kennung, wobei die Kennung der elektronischen Client-Vorrichtung zugeordnet ist, und eine Liste zugeordneter Verbindungen umfasst, und
- wenn eine Nachricht für die elektronische Client-Vorrichtung bestimmt ist, dann
- Suchen der Liste der zugeordneten Verbindungen in der Aggregationstabelle,
- Bestimmen einer Verbindung zum Senden der Nachricht,
- Senden der Nachricht über die bestimmte Verbindung.

6. Verfahren für ein drahtloses Kommunikationsnetzwerk, das mehrere Frequenzbänder nutzt und mindestens eine elektronische Vorrichtung, Client (210, 600) genannt, wobei jede elektronische Client-Vorrichtung mindestens zwei Funkmodule (211, 213, 604...60N) umfasst, wobei jedes Funkmodul geeignet ist, ein Frequenzband der mehreren Frequenzbänder zu nutzen, und eine elektronische Vorrichtung, Master (200, 400, 500) genannt, umfasst, wobei die elektronische Master-Vorrichtung mindestens zwei Funkmodule (201, 202, 203, 204, 505...50N) umfasst, wobei jedes Funkmodul geeignet ist, ein Frequenzband der mehreren Frequenzbänder zu nutzen, wobei das Verfahren den Aufbau mehrerer gleichzeitiger Verbindungen zwischen einer elektronischen Client-Vorrichtung und der elektronischen Master-Vorrichtung ermöglicht, wobei das Verfahren durch die elektronische Client-Vorrichtung ausgeführt wird und folgende Schritte umfasst:
- Senden (305) einer Nachricht, die eine Anforderung zum Aufbau einer ersten Verbindung zwischen der elektronischen Master-Vorrichtung und der elektronischen Client-Vorrichtung umfasst, über ein erstes Funkmodul der elektronischen Client-Vorrichtung und an ein erstes Funkmodul der elektronischen Master-Verbindung, wobei die Nachricht eine Kennung, die der elektronischen Client-Vorrichtung zugeordnet ist, und eine erste Authentifizierungsinformation, die der Anforderung zum Aufbau einer Verbindung zugeordnet ist, umfasst,
- Empfangen (325) einer Nachricht, die eine Anfrage zur Verifizierung der gesendeten Anforderung zum Aufbau der ersten Verbindung umfasst, über ein zweites Funkmodul der elektronischen Client-Vorrichtung, das vom ersten Funkmodul der elektronischen Client-Vorrichtung verschieden ist, und von einem zweiten Funkmodul der elektronischen Master-Vorrichtung, das vom ersten Funkmodul der elektronischen Master-Vorrichtung verschieden ist, wobei die Nachricht eine erste Authentifizierungsinformation umfasst,
- Feststellen, ob die gesendete erste Authentifizierungsinformation gleich der empfangenen ersten Authentifizierungsinformation ist, und wenn das der Fall ist:
- Senden (330) einer Nachricht, die eine Information zur Validierung der Anforderung zum Aufbau der ersten Verbindung umfasst, über das zweite Funkmodul der elektronischen Client-Vorrichtung und an das zweite Funkmodul der elektronischen Master-Vorrichtung und
- Aufbauen (340) der ersten Verbindung zwischen dem ersten Funkmodul der elektronischen Client-Vorrichtung und dem ersten Funkmodul der elektronischen Master-Vorrichtung.

7. Vorrichtung nach dem vorhergehenden Anspruch, wobei die Nachricht, die eine Information zur Validierung der Anforderung zum Aufbau der ersten Verbindung umfasst, außerdem eine zweite Authentifizierungsinformation umfasst, wobei die erste Verbindung zwischen dem ersten Funkmodul der elektronischen Client-Vorrichtung und dem ersten Funkmodul der elektronischen Master-Vorrichtung nur aufgebaut wird, wenn die elektronische Client-Vorrichtung eine Anfragenachricht zum Verbindungsaufbau der elektronischen Master-Vorrichtung empfängt, die die zweite Authentifizierungsinformation umfasst.

8. Verfahren nach Anspruch 5, wobei das drahtlose Kommunikationsnetzwerk einer Norm IEEE 802.11 entspricht, wobei jedes Funkmodul der elektronischen Master-Vorrichtung eine Signalisierungsnachricht sendet, die mindestens eine erste und eine zweite Kennung des drahtlosen Netzwerks umfasst, wobei die zweite Kennung des drahtlosen Netzwerks in Abhängigkeit von der ersten Netzwerkkennung bestimmt wird, wobei jede elektronische Client-Vorrichtung, die mehrere gleichzeitige Verbindungen mit der elektronischen Master-Vorrichtung aufbauen will, jede Verbindung unter Nutzung der zweiten Netzwerkkennung aufbaut.

9. Elektronische Vorrichtung, Master (200, 400, 500) genannt, wobei die elektronische Master-Vorrichtung geeignet ist, mit einem drahtlosen Kommunikationsnetzwerk verbunden zu werden, das mehrere Frequenzbänder nutzt und mindestens eine elektronische Vorrichtung, Client (210, 600) genannt, umfasst, wobei jede elektronische Client-Vorrichtung mindestens zwei Funkmodule (211, 213, 604...60N) umfasst, wobei jedes Funkmodul geeignet ist, ein Frequenzband der mehreren Frequenzbänder zu nutzen, wobei die elektronische Master-Vorrichtung mindestens zwei Funkmodule (201, 202, 203, 204, 505...50N) umfasst, wobei jedes Funkmodul geeignet ist, ein Frequenzband der mehreren Frequenzbänder zu nutzen, wobei die elektronische Master-Vorrichtung für Folgendes geeignet ist:
- Empfangen einer Nachricht, die eine Anforderung zum Aufbau einer ersten Verbindung zwischen der elektronischen Master-Vorrichtung und der elektronischen Client-Vorrichtung umfasst, über ein erstes Funkmodul der elektronischen Master-Vorrichtung und von einem ersten Funkmodul der elektronischen Client-Vorrichtung, wobei die Nachricht eine Kennung, die der elektronischen Client-Vorrichtung zugeordnet ist, und eine erste Authentifizierungsinformation, die der Anforderung zum Aufbau einer Verbindung zugeordnet ist, umfasst,
- Feststellen, ob schon eine zweite Verbindung zwischen einem zweiten Funkmodul der elektronischen Master-Vorrichtung, das vom ersten Funkmodul der elektronischen Master-Vorrichtung verschieden ist, und einem zweiten Funkmodul der elektronischen Client-Vorrichtung, das der empfangenen Kennung entspricht, aufgebaut ist, wobei das zweite Funkmodul der elektronischen Client-Vorrichtung vom ersten Funkmodul der elektronischen Client-Vorrichtung verschieden ist, und wenn das der Fall ist, dann:
- Senden einer Nachricht, die eine Anfrage zur Verifizierung der empfangenen Anforderung zum Aufbau der ersten Verbindung umfasst, über das zweite Funkmodul der elektronischen Master-Vorrichtung und an das zweite Funkmodul der elektronischen Client-Vorrichtung, wobei die Nachricht die empfangene erste Authentifizierungsinformation umfasst,
- Empfangen einer Nachricht, die eine Information zur Validierung der Anforderung zum Aufbau der ersten Verbindung umfasst, über das zweite Funkmodul der elektronischen Master-Vorrichtung und vom zweiten Funkmodul der elektronischen Client-Vorrichtung und
- Aufbauen der ersten Verbindung zwischen dem ersten Funkmodul der elektronischen Client-Vorrichtung und dem ersten Funkmodul der elektronischen Master-Vorrichtung.

10. Elektronische Vorrichtung, Client (210, 600) genannt, wobei die elektronische Client-Vorrichtung geeignet ist, mit einem drahtlosen Kommunikationsnetzwerk verbunden zu werden, das mehrere Frequenzbänder nutzt und eine elektronische Vorrichtung, Master (200, 400, 500) genannt, umfasst, wobei jede elektronische Master-Vorrichtung mindestens zwei Funkmodule (201, 202, 203, 204, 505...50N) umfasst, wobei jedes Funkmodul geeignet ist, ein Frequenzband der mehreren Frequenzbänder zu nutzen, wobei die elektronische Client-Vorrichtung mindestens zwei Funkmodule (211, 213, 604...60N) umfasst, wobei jedes Funkmodul geeignet ist, ein Frequenzband der mehreren Frequenzbänder zu nutzen, wobei die elektronische Client-Vorrichtung zu Folgendem konfiguriert ist:
- Senden (305) einer Nachricht, die eine Anfrage zum Aufbau einer ersten Verbindung zwischen der elektronischen Master-Vorrichtung und der elektronischen Client-Vorrichtung umfasst, über ein erstes Funkmodul der elektronischen Client-Vorrichtung und an ein erstes Funkmodul der elektronischen Master-Vorrichtung, wobei die Nachricht eine Kennung, die der elektronischen Client-Vorrichtung zugeordnet ist, und eine erste Authentifizierungsinformation, die der Anforderung zum Aufbau der Verbindung zugeordnet ist, umfasst,
- Empfangen (325) einer Nachricht, die eine Anfrage zur Verifizierung der gesendeten Anforderung zum Aufbau der ersten Verbindung umfasst, über ein zweites Funkmodul der elektronischen Client-Vorrichtung, das vom ersten Funkmodul der elektronischen Client-Vorrichtung verschieden ist, und von einem zweiten Funkmodul der elektronischen Master-Vorrichtung, das vom ersten Funkmodul der elektronischen Master-Vorrichtung verschieden ist, wobei die Nachricht eine erste Authentifizierungsinformation enthält,
- Feststellen, ob die gesendete erste Authentifizierungsinformation gleich der empfangenen ersten Authentifizierungsinformation ist, und wenn das der Fall ist:
- Senden (330) einer Nachricht, die eine Information zur Validierung der Anforderung zum Aufbau der ersten Verbindung umfasst, über das zweite Funkmodul der elektronischen Client-Vorrichtung und an das zweite Funkmodul der elektronischen Master-Vorrichtung und
- Aufbauen (340) der ersten Verbindung zwischen dem ersten Funkmodul der elektronischen Client-Vorrichtung und dem ersten Funkmodul der elektronischen Master-Vorrichtung.

11. Computerprogramm, umfassend Anweisungen zum Umsetzen eines Verfahrens (300), das den Aufbau mehrerer gleichzeitiger Verbindungen zwischen einer elektronischen Vorrichtung, Client (210, 600) genannt, und der elektronischen Master-Vorrichtung nach einem der Ansprüche 1 bis 5 ermöglicht, durch einen Prozessor (501) einer elektronischen Vorrichtung, Master (200, 400, 500) genannt, eines drahtlosen Kommunikationsnetzwerks, das mehrere Frequenzbänder nutzt, wobei die elektronische Master-Vorrichtung mindestens zwei Funkmodule (201, 202, 203, 204, 505...50N) umfasst, wobei jedes Funkmodul geeignet ist, ein Frequenzband der mehreren Frequenzbänder zu nutzen, wenn das Computerprogramm durch den Prozessor ausgeführt wird.

12. Speichermedium, auf dem das Computerprogramm nach dem vorhergehenden Anspruch gespeichert ist.

13. Computerprogramm, umfassend Anweisungen zum Umsetzen eines Verfahrens (300), das den Aufbau mehrerer gleichzeitiger Verbindungen zwischen einer elektronischen Vorrichtung, Master (200, 400, 500) genannt, und der elektronischen Client-Vorrichtung nach einem der Ansprüche 6 bis 7 ermöglicht, durch einen Prozessor (601) einer elektronischen Vorrichtung, Client (210, 600) genannt, eines drahtlosen Kommunikationsnetzwerks, das mehrere Frequenzbänder nutzt, wobei die elektronische Client-Vorrichtung mindestens zwei Funkmodule (211, 213, 604...60N) umfasst, wobei jedes Funkmodul geeignet ist, ein Frequenzband der mehreren Frequenzbänder zu nutzen, wenn das Computerprogramm durch den Prozessor ausgeführt wird.

14. Speichermedium, auf dem das Computerprogramm nach dem vorhergehenden Anspruch gespeichert ist.

## Claims

1. Method, for a wireless communication network using a plurality of frequency bands and comprising at least one so-called client electronic device (210, 600), each client electronic device comprising at least two radio modules (211, 213, 604 ...60N), each radio module being adapted to use a frequency band in the plurality of frequency bands, and a so-called master electronic device (200, 400, 500), the master electronic device comprising at least two radio modules (210, 202, 203, 204, 505 ...50N), each radio module being adapted to use a frequency band in the plurality of frequency bands, the method allowing the establishment of a plurality of simultaneous connections between a client electronic device and the master electronic device, the method being executed by the master electronic device and comprising the steps of:
- receiving (305), via a first radio module of the master electronic device and coming from a first radio module of a client electronic device, a message comprising a request to establish a first connection between the master electronic device and the client electronic device, the message comprising an identifier associated with the client electronic device and a first item of authentication information associated with the request to establish a connection,
- determining (310) whether a second connection is already established between a second radio module of the master electronic device distinct from said first radio module of the master electronic device and a second radio module of the client electronic device corresponding to the identifier received, said second radio module of the client electronic device being distinct from said first radio module of the client electronic device, and, if such is the case, then:
- sending (325), via the second radio module of the master electronic device and intended for the second radio module of the client electronic device, a message comprising a request to verify the request to establish the first connection received, the message comprising the first item of authentication information received,
- receiving (330), via the second radio module of the master electronic device and coming from the second radio module of the client electronic device, a message comprising information validating the request to establish the first connection, and
- establishing (340) the first connection between the first radio module of the client electronic device and the first radio module of the master electronic device.

2. Method according to the preceding claim, the message comprising the validation information also comprising a second item of authentication information, the master electronic device sending a message to the client electronic device in order to establish the first connection, this message comprising the second item of authentication information.

3. Method according to one of the preceding claims, the wireless communication network being in accordance with an IEEE 802.11 standard, each radio module of the master electronic device sending a signalling message comprising at least one first and one second wireless network identifier, the second wireless network identifier being determined according to the first network identifier, the method is **characterised in that** each client electronic device wishing to establish a plurality of connections with the master electronic device establishes each connection using the second network identifier.

4. Method according to the preceding claim, the signalling message being:
- a beacon frame sent periodically, or
- a message sent in return after reception of a wireless-network detection message sent by a client electronic device.

5. Method according to one of the preceding claims, the method comprising a subsequent step of bonding (345) the first radio connection with previously established connections, the bonding step comprising the steps of:
- updating a so-called bonding table, the table comprising, for each bonding, an associated identifier, the identifier associated with the client electronic device and a list of associated connections, and
- when a message is intended for the client electronic device, then:
- seeking, in the bonding table, the list of associated connections,
- determining a connection for sending the message,
- sending the message via the connection determined.

6. Method, for a wireless communication network using a plurality of frequency bands and comprising at least one so-called client electronic device (210, 600), each client electronic device comprising at least two radio modules (211, 213, 604 ...60N), each radio module being adapted to use a frequency band in the plurality of frequency bands, and a so-called master electronic device (200, 400, 500), the master electronic device comprising at least two radio modules (210, 202, 203, 204, 505 ... 50N), each radio module being adapted to use a frequency band in the plurality of frequency bands, the method allowing the establishment of a plurality of simultaneous connections between a client electronic device and the master electronic device, the method being executed by the client electronic device, the method comprising the steps of:
- sending (305), via a first radio module of the client electronic device and to a second radio module of the master electronic device, a message comprising a request to establish a first connection between the master electronic device and the client electronic device, the message comprising an identifier associated with the client electronic device and a first item of authentication information associated with the connection establishment request,
- receiving (325), via a second radio module of the client electronic device distinct from said first radio module of the client electronic device and coming from a second radio module of the master electronic device distinct from said first radio module of the master electronic device, a message comprising a request to verify the request to establish the first connection sent, the message comprising a second item of authentication information,
- determining whether the first item of authentication information sent is equal to the first item of authentication information received and, if such is the case,
- sending (330), via the second radio module of the client electronic device and intended for the second radio module of the master electronic device, a message comprising information validating the request to establish the first connection, and
- establishing (340) the first connection between the first radio module of the client electronic device and the first radio module of the master electronic device.

7. Method according to the preceding claim, the message comprising information validating the request to establish the first connection comprising in addition a second item of authentication information, the first connection between the first radio module of the client electronic device and the first radio module of the master electronic device being established only if the client electronic device receives a message requesting establishment of a connection of the master electronic device comprising the second item of authentication information.

8. Method according to claim 5, the wireless communication network being in accordance with an IEEE 802.11 standard, each radio module of the master electronic device sending a signalling message comprising at least one first and one second wireless network identifier, the second wireless network identifier being determined according to the first network identifier, each client electronic device wishing to establish a plurality of simultaneous connections with the master electronic device establishes each connection using the second network identifier.

9. So-called master electronic device (200, 400, 500), the master electronic device being adapted for being connected to a wireless communication network using a plurality of frequency bands and comprising at least one so-called client electronic device (210, 600), each client electronic device comprising at least two radio modules (211,213, 604 ... 60N), each radio module being adapted to use a frequency band in the plurality of frequency bands, the master electronic device comprising at least two radio modules (210, 202, 203, 204, 505 ... 50N), each radio module being adapted for using a frequency band in the plurality of frequency bands, the master electronic device being adapted for:
- receiving, via a first radio module of the master electronic device and coming from a first radio module of a client electronic device, a message comprising a request to establish a first connection between the master electronic device and the client electronic device, the message comprising an identifier associated with the client electronic device and a first item of authentication information associated with the request to establish a connection,
- determining whether a second connection is already established between a second radio module of the master electronic device distinct from said first radio module of the master electronic device and a second radio module of the client electronic device corresponding to the identifier received, said second radio module of the client electronic device being distinct from said first radio module of the client electronic device, and, if such is the case, then:
- sending, via the second radio module of the master electronic device and intended for the second radio module of the client electronic device, a message comprising a request to verify the request to establish the first connection received, the message comprising the first item of authentication information received,
- receiving, via the second radio module of the master electronic device and coming from the second radio module of the client electronic device, a message comprising information validating the request to establish the first connection, and
- establishing the first connection between the first radio module of the client electronic device and the first radio module of the master electronic device.

10. So-called client electronic device (210, 600), the client electronic device being adapted to be connected to a wireless communication network using a plurality of frequency bands and comprising a so-called master electronic device (200, 400, 500), each master electronic device comprising at least two radio modules (210, 202, 203, 204, 505 ... 50N), each radio module being adapted to use a frequency band in the plurality of frequency bands, the client electronic device comprising at least two radio modules (211, 213, 604 ...60N), each radio module being adapted to use a frequency band in the plurality of frequency bands, the client electronic device being configured to:
- send (305), via a first radio module of the client electronic device and to a first radio module of the master electronic device, a message comprising a request to establish a first connection between the master electronic device and the client electronic device, the message comprising an identifier associated with the client electronic device and a first item of authentication information associated with the connection establishment request,
- receive (325), via a second radio module of the client electronic device distinct from said first radio module of the master electronic device and coming from a second radio module of the master electronic device distinct from said first radio module of the master electronic device, a message comprising a request for verification of the request to establish the first connection sent, the message comprising a second item of authentication information,
- determine whether the first item of authentication information sent is equal to the first item of authentication information received and, if such is the case,
- send (330), via the second radio module of the client electronic device and intended for the second radio module of the master electronic device, a message comprising information validating the request to establish the first connection, and
- establish (3400 the first connection between the first radio module of the client electronic device and the first radio module of the master electronic device.

11. Computer program, comprising instructions for implementing, by a processor (501) of a so-called master electronic device (200, 400, 500) of a wireless communication network using a plurality of frequency bands, the master electronic device comprising at least two radio modules (201, 202, 203, 204, 505... 50N), each radio module being adapted to use a frequency band in the plurality of frequency bands, a method (300) allowing the establishment of a plurality of connections between a so-called client electronic device (210, 600) and the master electronic device according to one of claims 1 to 5, when the computer program is executed by the processor.

12. Recording medium whereon the computer program according to the preceding claim is stored.

13. Computer program, comprising instructions for implementing, by a processor (601) of a so-called client electronic device (210, 600) of a wireless communication network using a plurality of frequency bands, the client electronic device comprising at least two radio modules (211, 213, 604 ...60N), each radio module being adapted to use a frequency band in the plurality of frequency bands, a method (300) allowing the establishment of a plurality of connections between a so-called master electronic device (200, 400, 500) and the client electronic device according to one of claims 6 to 7, when the computer program is executed by the processor.

14. Recording medium whereon the computer program according to the preceding claim is stored.
